# EUROPEAN PATENT APPLICATION

(11) **EP 3 160 069 A1**
(43) Date of publication of application: **26.04.2017**
(21) Application number: 15190555.1
(22) Date of filing: 20.10.2015
(51) Int. Cl.: H04H 60/31, H04H 60/33, G06F 17/30, H04N 21/442, H04N 21/2343, H04N 21/658

(54) **MEDIA CONTENT DETERMINATION**

(71) Applicant: Koninklijke KPN N.V., 2516 CK The Hague (NL)
(72) Inventor: SCHINKEL, Dolf, 2181 LP Hillegom (NL); VAN DE BERGHE, Rudolf Peter, 1742 RX Schagen (NL); KIEVIT, Johannes, 2352 CL Leiderdorp (NL)
(74) Representative: Wuyts, Koenraad Maria

(57) **Abstract**

A client device (12) in a broadcast system (10) is configured for delivering broadcast content to a display device (13). The client device (12) comprises a user-operable channel selection unit configured for selecting a broadcast channel from a plurality of broadcast channels provided by a back-end device (11), a channel detection unit configured for detecting, at a plurality of points in time (t₁, t₂, ...), the broadcast channel selected by the selection unit at the respective point in time, and a channel reporting unit (33) configured for reporting, to a back-end device, the broadcast channel determined by the channel detection unit at each of the points in time. The back-end device (11) may comprise a first storage unit for storing a table of broadcast channels and associated content items with their start and end times, and a content determination unit for determining, using the reported broadcast channels and the table, the content items selected by the client device.

## Description

### Field of the Invention

The present invention relates to content determination. More in particular, the present invention relates to a client device for delivering media content, such as broadcast content, to a user and for determining which content item is selected by a user from a plurality of content items. The present invention also relates to a back-end device configured for use with such a client device, and to a method of determining channel use in a content delivery system.

### Background of the Invention

It is well known to deliver content, such as broadcast content, to client devices, such as set-top boxes connected to television devices. Broadcast content can include radio or television programs of all kinds, while content in general may include video-on-demand, for example. A set-top box is typically used to select and deliver content to a television device, the selection being made by a user. However, a client device is not necessarily a set-top box, as content may also be selected and watched directly on a television device or on a portable device, such as a smartphone or a tablet device, for example, without using a separate client device.

Content may be offered as a plurality of channels, such as television channels, each channel including a sequence of content items. By selecting a channel at a particular point in time, the corresponding content item is selected and will be rendered. When broadcasting content, a back-end device, such as a content server, broadcasts all available channels to the client device, which typically selects a single channel to be rendered. As a result, which channel is selected in the client device and hence which content item is being rendered is typically not known at the back-end device.

For some applications, however, it is desirable to know at the back-end device which content item is being rendered, and more in particular whether the whole content item is rendered or only a part. As is well known, users watching content such as television programs may change the selected channel relatively often. As a result, knowing which channels were selected during a day or evening may provide an incorrect representation of the content items actually listened to and/or watched by a user.

For various content provision systems it is necessary to determine relatively accurately which content items are selected by a user. For example, a back-end system may store a content item, such as a television program, in two or more versions, each having a different format, for example: a regular format, an HD (High Definition) format and an HD+ (Improved High Definition) format. Storing multiple versions of the same content item requires substantial amounts of storage. It would be much more efficient to store multiple versions of popular content items only. Less popular content items could be stored in a single format only, typically the lowest quality format having the smallest size. However, such a storage saving scheme requires knowledge of the watching, and hence selecting behavior of the users.

United states patent US 8 943 528 discloses a system for probabilistic matching of audio samples from a television program. Reference audio samples for time slices corresponding to a broadcast television program are used to determine the channel displayed by a media device, such as a television apparatus. This known method is relatively complex and utilizes a substantial amount of stored audio samples, which increases the storage requirements.

### Summary of the Invention

It is an object of the present invention to solve this problem by providing a client device configured for delivering broadcast content to a display device, the client device comprising:
- a user-operable channel selection unit configured for selecting a broadcast channel from a plurality of broadcast channels provided by a back-end device,
- a channel detection unit configured for detecting, at a plurality of points in time, the broadcast channel selected by the selection unit at the respective point in time, and
- a channel reporting unit configured for reporting, to a back-end device, the broadcast channel determined by the channel detection unit at each of the points in time.
By providing, in the client device, a channel detection unit capable of detecting the selected channel at a plurality of points in time, it is possible to collect information regarding the selected channel at various points in time. By further providing, in the client device, a channel reporting unit capable of reporting the channel or channels selected at the various points in time, the back-end device can obtain the channel selection information.

It is noted that according to the invention, only the channel selection information has to be determined and reported to the back-end system, possibly together with time information. There is no need to collect, store and compare audio samples, as in US 8 943 528 referred to above.

In an embodiment, the channel detection unit is configured for detecting the broadcast channel by using fixed intervals between the points in time, said intervals preferably being at least one minute and at most 30 minutes, said intervals more preferably being approximately five minutes. The intervals, although having fixed lengths, may be chosen in dependence on the typical length of the content items concerned. For example, when the content items of interest have a typical duration of, for example, an hour, intervals of 10 or 15 minutes may be chosen, while in case the content items of interest typically have a duration of only 20 minutes, intervals of 5 minutes or less may be chosen.

In another embodiment, the channel detection unit is configured for detecting the broadcast channel by using variable intervals between the points in time. Intervals having a variable length have the advantage of being more flexible and providing more accurate results. In a particularly advantageous embodiment, for example, the channel detection unit is configured for varying the intervals in dependence of an event in the selected broadcast, wherein the event may comprise a commercial break and/or the start of a new content item. That is, just before and/or just after the start of a commercial break, the length of the intervals may be shortened, thus increasing the frequency at which the channel is determined (commercial breaks may occur at predetermined points in time, for example just before and after the evening news, or may be detected based on content or control signals). It will be understood that commercial breaks may cause the user to switch channels, so a more frequent channel detection around commercial breaks may produce a more reliable indication of the channel selection. In this embodiment, the change in interval length is content-based.

In another advantageous embodiment, the channel detection unit is configured for varying the intervals in dependence of user-operated selection of another broadcast channel. In this embodiment, therefore, the change in interval length is based upon user input, that is, a new selection input by the user.

In some embodiments, the channel detection unit is configured for increasing or decreasing the length of the intervals in dependence of selection of another channel. That is, the intervals may be shortened when another channel is selected, thus increasing the channel detection frequency. This feature can be used to provide more accurate results, as a change of channel may within a short period of time be followed by another change of channel.

The interval lengths may also be decreased in dependence on events, or on the absence of events. For example, the absence of commercial breaks in a certain time period may cause the interval length to be increased.

The invention also provides a back-end device configured for use with the client device defined above, the back-end device comprising:
- a first storage unit for storing the reported broadcast channels and the associated points in time, and for storing a table of broadcast channels and associated content items with their start and end times, and
- a content determination unit for determining, using the reported broadcast channels and the table, the content items selected by the client device.
By storing a table of the broadcast channels and the content items of those channels, which table may be an electronic program guide (EPG) table, the content determination unit is able to determine which content item was selected (and presumably watched) by a user on the reported channel at the reported point in time. Thus the selection data collected in the client (or front-end) device are used in the back-end device to determine the actual selected content item.

In a preferred embodiment, the content determination unit is further configured for determining, using the reported points in time and the stored start and end times, a relative and/or absolute selection duration of a selected content item. That is, when at multiple reported points in time the same content item is identified, it can be concluded that that content item was selected, at least up to and including the last reported point in time. Comparing that last reported point in time (in which the same content item was identified) with the duration of that content item, which duration can be derived from the content item's start and end times, provides an indication of the selection duration of that content item.

The back-end device may further comprise a ranking unit for ranking content items in accordance with their selection duration relative to each other, for example by comparing their selection durations. A ranking of the selection duration provides an indication of the relevance of the content items to the user. The ranking unit may be configured for ranking the content items of a single user, but may additionally or alternatively be configured for ranking the content items of a plurality of users. The ranking unit may therefore be configured for aggregating selection durations and/or for aggregating rankings of users.

The ranking of content items may be used advantageously. In an embodiment, the back-end device further comprises a second storage unit for storing content items to be transmitted on demand, in which each content item can be stored in at least two versions, each version having different memory requirements, and the storage unit being configured to delete at least one version of a content item having a low selection duration (compared to other content items) and/or a low ranking. In such an embodiment, each video content item may be stored in a standard format, in HD (High Definition), and in Ultra HD (also known as 4K), for example. A service provider may decide to store only a limited number of versions of the least selected content items in a ranking, preferably a single version (for example the standard format) only, thus freeing storage space by deleting at least one of the higher quality versions (for example the HD and Ultra HD versions) of those content items. It is noted that the version(s) stored may include a high quality version from which a lower quality version can be derived, thus making it possible to delete a lower quality version, such as the standard version, for example. By deleting versions of content items that are selected over a smaller part of their duration, the selection information is used to optimize the storage capacity of content servers.

Although the client device and the display device will often be two distinct devices, such as a set-top box and a television apparatus, in some embodiments they may constitute a single, integrated device. That is, the client device may comprise the display device, or vice versa. A combined client and display device may for example be constituted by a mobile device, such as a smartphone or a tablet-type device.

The invention additionally provides a broadcast system, comprising at least one client device as defined above and at least one back-end device as defined above. The broadcast system may additionally comprise a network for distributing content items to the client devices.

The invention further provides a method of determining broadcast channel use, wherein a broadcast channel is selected by a user from a plurality of broadcast channels, the method comprising:
- detecting, in a client device at a plurality of points in time, which broadcast channel is selected, and
- reporting, to a back-end device, the determined broadcast channel at each of the points in time.

The method may further comprise determining, using the reported broadcast channels at the points in time and a stored table of broadcast channels and associated content items with their start and end times, the content items selected by the client device.

The method may further comprise determining, using the points in time and the start and end times, a (relative and/or absolute) selection duration of a selected content item. If such a selection duration is made, the method may further comprise ranking content items in accordance with their selection duration.

The invention yet further provides a software program product comprising instructions allowing a processor to carry out the method defined above. The software program product may be stored on a tangible carrier, such as a DVD or a USB stick. Alternatively, the software program product may be stored on a server from which it may be downloaded using the Internet. The software program product contains software instructions which can be carried out by the processor of a device, such as a server, a user device (for example a smartphone), and/or a monitoring device.

### Brief description of the drawings

The present invention will further be explained with reference to exemplary embodiments illustrated in the drawings, in which:
Fig. 1 schematically shows a system for broadcasting content items in accordance with the invention.
Fig. 2 schematically shows a client device for receiving content items in accordance with the invention.
Fig. 3 schematically shows a back-end device for broadcasting content items in accordance with the invention.
Fig. 4 schematically shows a table of channels and content items as may be used in the present invention.
Fig. 5 schematically shows a content item of the table of channels and content items of Fig. 4 in more detail.
Fig. 6 schematically shows an exemplary embodiment of the method according to the invention.
Fig. 7 schematically shows a software program product containing instructions for carrying out the method of the invention.

### Detailed description of embodiments

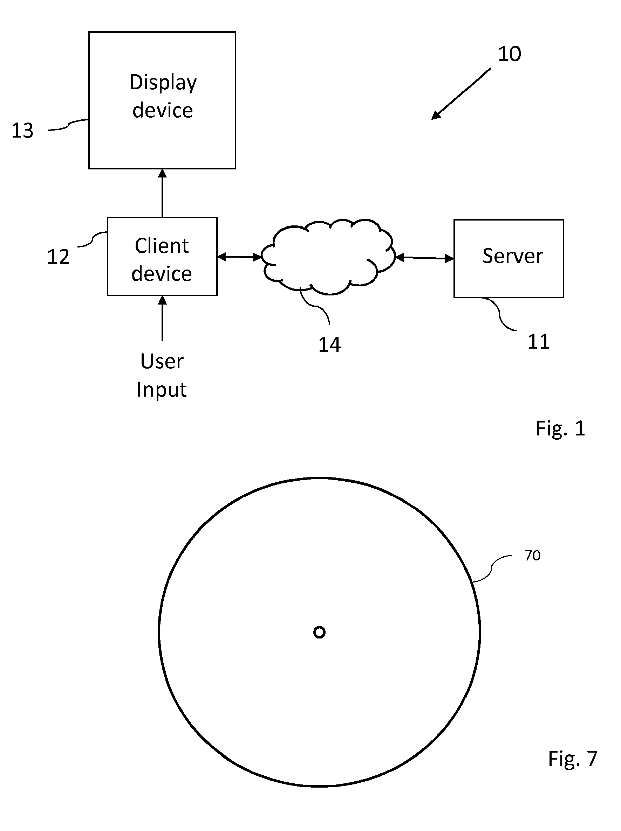

The exemplary broadcast system 10 schematically illustrated in Fig. 1 comprises a server 11, a client device (for example a set-top box) 12 and a display device (for example a television apparatus) 13. The server 11 and the client device 12 are connected via a network 14. The client device 12 and the display device 13 can be located at a user's premises, for example her home or office, while the server 11 can be located at a remote location, for example at a data center operated by a television service provider. The network can be any suitable network and can include switches and other network equipment. Although only a single client device 12 and a single television set 13 are shown in Fig. 1, it will be understood that a typical broadcast system will include a plurality of client devices and display devices. Similarly, a typical broadcast system may include more than one server.

The client device 12, which may be constituted by a set-top box, for example, is configured for receiving user input, for example via a remote control unit or a touch screen unit. The user input can include a channel number, which causes the client device 12 to select the corresponding channel and pass its content on to the display device 13. The client device (set-top box) 12 and the display device (television apparatus 13) are in the embodiment shown two separate devices. In some embodiments, however, the client device 12 and the display device 13 may be constituted by a single, integrated client and display device. Although in the embodiment shown the display device 13 is shown as a television device, in other embodiments the display device may be constituted by a display screen, a tablet device, a smartphone device or a computer apparatus. In some embodiments, the client device and the display device may constitute a single, integrated device. Although the client device is here described as a hardware device, some or all parts of the client device may be implemented in software.

It is noted that the term "user" as used in this document is not limited to a person but may also include a device or software application which selects a channel from the available channels. A device providing automated channel selection may include a recommendation engine capable of recommending or selecting content items based upon user preferences. The wording "selected by the user" therefore also includes selected by a device producing user input, and effectively means selected by the client device, in response to input.

The client device 12 receives multiple channels from the server 11 and typically passes only one of those channels on to the display device 13 (exceptionally, a display device may allow two content items to be displayed simultaneously). In a typical broadcast system, the server 11 has no knowledge of the channel selected by the user.

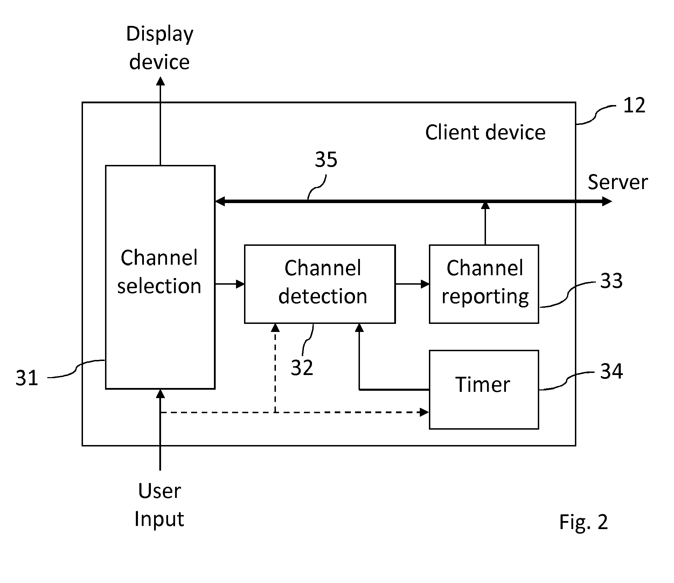

An exemplary embodiment of the client device 12 is illustrated in Fig. 2. The client device 12 is shown to comprise a channel selection unit 31, a channel detection unit 32, a channel reporting unit 33, a timer unit 34 and a data connection 35. The client device 12 may comprise further components which are not shown in Fig. 2.

The channel selection unit 31 is configured to receive content from the server (11 in Fig. 1) via the data connection 35. The content consists of a plurality of content items, such as television programs and/or radio programs, at least some of which are effectively received simultaneously on different channels. The channel selection unit 31 is also configured to receive user input from a user, for example through a remote control unit. In accordance with the user input, the channel selection unit 31 selects one of the available channels and passes the content of this selected channel on to the display device (13 in Fig. 1).

In accordance with the invention, the client device 12 is provided with a channel detection unit 32 which is configured to determine which channel is selected. To this end, the channel detection unit 32 can receive information from the channel selection unit 31 indicating which channel has been selected. Additionally, or alternatively, the channel detection unit 32 may receive the user input information. Based on the received information, the channel detection unit 32 identifies the selected channel and passes this channel identification, which may be a channel number, on to the channel reporting unit 33. The channel reporting unit 33 sends the channel identification, via the data connection 35, to the server.

In the embodiment of Fig. 2, the client device 12 is further provided with a timer 34. The timer 34 is configured to regularly cause the channel detection unit 32 to determine the channel. The timer 34 can be configured to do this at certain intervals, for example 1 minute, 5 minutes or 10 minutes. The interval duration may be adjusted depending on several factors, such as user input. Certain user input, such as a channel change command, may cause the timer 34 to shorten the duration of the intervals, for example from 10 minutes to 1 minute. Alternatively, or additionally, user input may cause the channel detection unit 32 to determine the channel at the moment the user input is received, independent of any timer control. The timer 34 is preferably also configured for providing absolute or relative time information to the channel detection unit 32. This allows the content determination unit 42 to add time information (such as a time stamp) to the channel information, thus producing time and channel data combinations for use by the server.

In some embodiments, the channel reporting unit sends both channel selection information and time information to the server. This combined information may be sent once per minute, once per hour or once per day, for example. In such embodiments, the information is collected and temporarily stored, for example in a suitable memory of the channel reporting unit. In other embodiments, the channel reporting unit sends the channel selection information as soon as this information is available, that is, in real time. In such embodiments, adding the time information to the sent information is typically not necessary.

The channel selection information and (optionally) the time information may be sent to the server using any suitable communication format, for example XML (Extensible Markup Language), JSON (JavaScript Object Notation) or CSV (Comma Separated Values).

Although the channel selection unit 31, the channel detection unit 32 and the channel reporting unit 33 are shown in Fig. 2 as three separate units, they may in some embodiments be combined into two units or into only a single unit.

In accordance with the present invention, the client device 12 sends channel selection information to the server 11 in order to determine which content item, such as a television program, the user has selected and is presumably watching. By repeatedly determining the content items selected by the user, the server is able to determine or at least estimate the amount of time a certain content item is selected. This amount of time can be compared with the duration of the content item, thus producing a relative amount of time and an indication of the user interest in this particular content item.

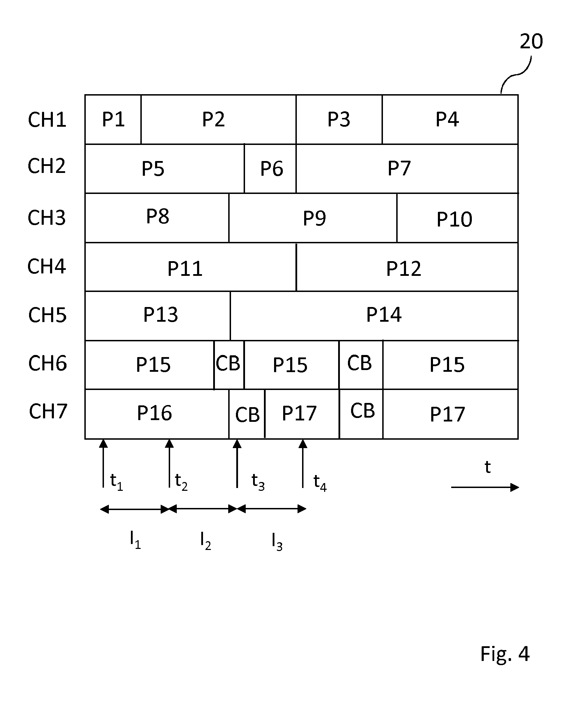

Accumulating this information for multiple content items and multiple users allows the server to be managed more efficiently, in particular when the server stores content items for later retransmission on demand. Content items may be stored for retransmission to allow users to view a film, for example, after it was broadcast. The amount of time a content item was selected by users may advantageously be used to manage stored content, for example by deleting copies and/or versions of content items which are not likely to be selected. This will later further be explained with reference to Fig. 4, which shows an example of an electronic program guide (EPG) table of the type that may be stored in a server.

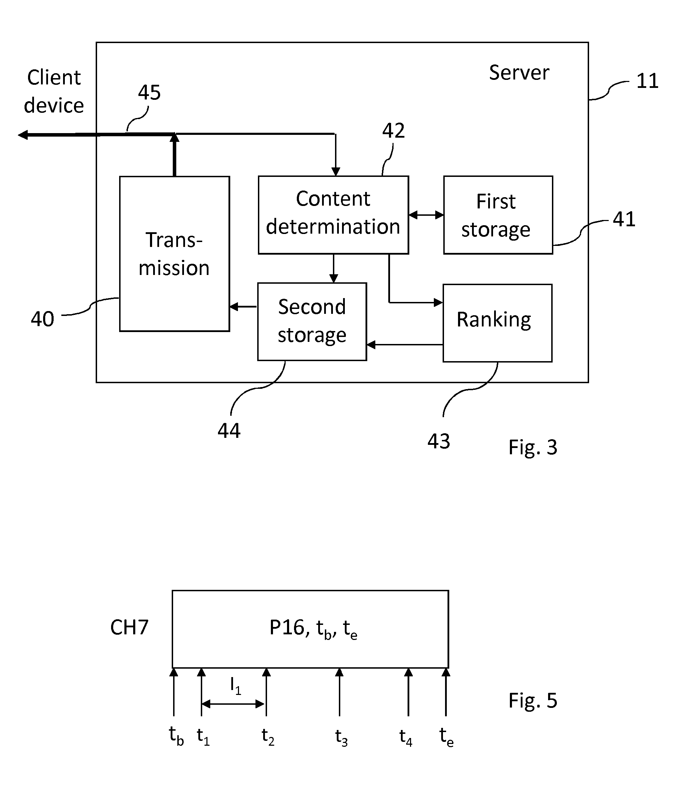

An exemplary embodiment of a server 11 is schematically illustrated in Fig. 3. The embodiment of Fig. 3 comprises a transmission unit 40, a first storage unit 41, a content determination unit 42, a ranking unit 43, a second storage unit 42 and a data connection 45. The server 11 may comprise further components which are not shown in Fig. 3. Although the first storage unit 41 and the second storage unit 42 are shown as two separate units, they may in some embodiments be constituted by a single, integrated unit. Conversely, either storage unit may in some embodiments be constituted by distributed storage units, for example as virtual storage in a storage area network or as cloud storage.

The transmission unit 40 is configured for transmitting content, via the data connection 45, to the client device (12 in Figs. 1 and 2). The transmission unit 40 is further configured for transmitting content via two or more channels, which allows two or more content items to be effectively transmitted simultaneously. The transmission provided by the transmission unit 40 is preferably a broadcast but the invention is not limited to broadcast and may also apply to video on demand, for example. The content to be transmitted is stored in the second storage unit 44.

The content determination unit 42 receives, via the data connection 45, channel identifications, and preferably also associated time information, from the channel reporting unit of the client device. The first storage unit 41 stores a table of broadcast channels and their content items, such as an Electronic Program Guide (EPG). Such a table will later be explained in more detail with reference to Fig. 4.

The content determination unit 42 uses the channel identification and the time information to access the first storage unit 41 and to retrieve an identification of the content item being broadcast on the channel and at the point in time corresponding with the information received from the client device. This will later be explained in more detail with reference to Fig. 5.

The content item identification determined by the content determination unit 42 can be fed to the ranking unit 43, which ranks the content items according to the frequency of their being selected by the user. Preferably, the ranking unit 43 is capable of accumulating the rankings of multiple users. In this way, an aggregate ranking of content items can be achieved. This allows to determine which content items are often selected and which are not. It may be found, for example, that some content items are never selected, or only rarely. This information can advantageously be used to manage the second storage unit, which contains the content items to be broadcast.

The second storage unit 44 may store content items in multiple formats, for example a standard format, an HD format and an Ultra HD format. As a result, multiple versions of a particular content item may be stored, each having a different format. If the ranking unit 43 determines that a particular content item is rarely watched, it can cause the second storage unit 44 to delete at least one and possibly two versions, leaving only the standard format version. This standard format can still be selected by the occasional user, while the disadvantage of not having higher-quality formats available is relatively small. This small disadvantage can be circumvented by providing a format conversion unit which is capable of converting a higher quality format (such as HD or Ultra HD) into a lower quality format (such as the standard format) as in that case the standard format (and possibly another format) can be deleted.

Deleting one or more versions of a multiple format content item offers the advantage of freeing precious storage space. As is well known, content items such as television programs and films require a significant amount of storage space, for example 10 to 20 MB (megabytes), in particular when they are stored a higher quality format such as HD or Ultra HD. By deleting one or more formats of a multiple format content item, significant amounts of storage can be saved. The saved storage may include permanent storage and/or cache storage (as is well known, cache storage typically provides faster access but is more expensive than permanent storage). The present invention may therefore advantageously be used for optimizing the use of storage, for example in data centers.

In addition, the present invention can be used to provide input for so-called recommender systems which recommend content items to users. By providing a ranking of often selected (that is, "popular") and rarely selected (that is, "unpopular") content items, a recommender system can make recommendations to a user or a group of users. It is noted that the design of a recommender system is beyond the scope of this document.

The exemplary table 20 illustrated in Fig. 4 indicates which content items or programs are broadcast on various channels, at certain points in time. On the vertical axis several broadcast channels are shown, while the horizontal axis represents time (t). The channels are in this example labeled CH1 - CH7, while the programs are labeled P1 - P17. At any point in time, for example point in time t₁, it can be seen which programs are broadcast on which channels.

As mentioned before, the client device (12 in Fig. 1) determines which channel is selected by a user and reports this information, together with the point in time at which the channel was determined, to the server (11 in Fig. 1). The information received by the server may have the format (tₓ, CHy), where tₓ is the point in time at which it was determined that CHy was the selected channel.

In an example, the first selection information received by the server is (t₁, CH2), which means that at time t₁ the selected channel was channel 2 (CH2). It follows from the table in Fig. 4 that the selected content item was program 5 (P5). The second selection information is, in the same example, (t2, CH2), indicating that at time t₂ the selected channel still was channel 2. Apparently the user is still (or again) selecting CH2 and P5. If the third selection information indicates that channel 2 is selected at time t₃, then it may be concluded that the user selected, and presumably watched, the whole program P5. However, if the third and fourth selection information indicates that channel 5 is selected at time t₃ and time t₄, then it may be concluded that the user switched to program P11.

The points in time t₁ - t₄ at which the user selection is determined are, in the example of Fig. 4, evenly spaced by intervals I₁ - I₃. Suitable interval lengths may be 5 minutes, 10 minutes or 20 minutes, for example. In an embodiment, these intervals are fixed and predetermined. In other embodiments, however, these intervals are variable. In particular, these intervals may be influenced by user behaviour, for example, as was already mentioned with reference to Fig. 2. User input (that is, channel selection input) may be used to shorten the interval between selection detection times, and/or may be used to immediately determine the selected channel. By shortening the intervals and hence increasing the channel detection frequency, the reliability of the channel detection is increased, at the cost of increased amounts of data.

This is further explained with reference to Fig. 5, which shows a content item of the table 20 of Fig. 4. The exemplary content item shown is program P16 of channel CH7. The identification of the program is stored in the table 20, together with its start time t_{b} and end time tₑ.

At points in time t₁, t₂, t₃ and t₄ the channel, and hence the current selection, is determined by the channel detection unit (32 in Fig. 2). As will be understood from Fig. 5, the more often a certain channel and a corresponding content item is found to be selected, the more probable it is that the user will have selected (and presumably watched or listened to) the whole content item. At time t₁ the content item has only been selected for about 10% of its duration. At time t₃ this has increased to about 60%, while at time t₄ this is about 90%. According to a further aspect of the present invention, the content item may receive a status "entirely selected" when it has been selected for at least a certain part (for example 80% or 90%) of its duration.

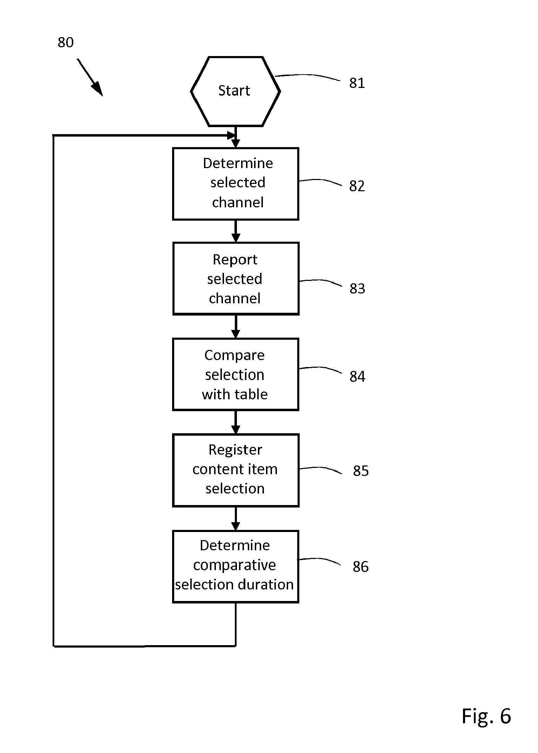

An embodiment of a method of determining broadcast channel use is schematically shown in Fig. 6. The exemplary method 80 starts in step 81. In step 82, the client device (12 in Fig. 1) detects which channel is selected by the user, for example by detecting which channel the client device forwards to the display device, and/or by detecting user input. In step 83, the client device reports the selected channel to the server (11 in Fig. 1). In some embodiments, the client device also reports a time indication (such as a time stamp) to the server.

In step 84, the server compares the selected channel with a channel table, such as an EPG (Electronic Program Guide). Such a table provides a time sequence of the content items per channel, as illustrated in the example of Fig. 4. Using a time indication and a channel selection indication, such as a channel number, the selected content item can be determined. This concludes the actual content determination.

However, the content thus determined can be advantageously used for determining an indication of the duration of the selection of a content item. To this end, the selection of a particular content item can be registered in (optional) step 85. That is, per content item one or more time indications (of the times of detected selection) can be registered. Using these time indications (or time single time indication if the selection was detected only once for this content item) and the duration information contained in the channel table mentioned above, a comparative selection duration can be determined in (optional) step 86, comparing the (relative and/or absolute) selection duration of a particular content item with the relative and/or absolute) selection duration of other content items. The method 80 is typically repeated by returning to step 82, but may be aborted when the client unit is switched off, for example.

In an embodiment, the relative selection duration may be determined in step 86 by dividing the duration of the content item (which duration is contained in the channel table) by the number of time intervals, assuming the time intervals have a fixed length. If the time intervals have a duration of 1 minute, for example, and a content item has a duration of 30 minutes, then 30 selection indications (each after a 1 minute interval) would amount to 100% of the content item being selection. If only 28 selection indications were received, then the relative selection duration is (28/30) x 100% = 93,3%. In this way, the selection duration of each content item can be determined for a particular user. Aggregating the selection durations for a plurality of users provides the (average) selection durations of content items. These aggregated (or "average") selection durations provide an indication of the likelihood that a particular content item will be selected again, for example as a "missed program" or video on demand item, for example in an NPVR (Network Personal Video Recorder) setting.

In an embodiment, the absolute selection duration may be obtained by registering the number of selection indications for a particular content item. Assuming that the time intervals between the selection indications are known, the absolute selection duration may be obtained by adding the duration of the time intervals between selections of a content item.

A software program product for causing a processor to carry out the method steps mentioned above is schematically illustrated in Fig. 7. The software program product may be stored on a tangible carrier 70, such as a DVD as illustrated, or a USB stick. Alternatively, the software program product may be stored on a server from which it may be downloaded using the Internet. The software program product contains software instructions which can be carried out by a processor of the back-end device, for example, so as to perform the method steps according to the present invention, for example the method steps illustrated in Fig. 6.

Although the invention has been explained with reference to broadcasting, the invention is not so limited and may also be used with video on demand, for example.

It will be understood that the description of the invention given above is not intended to limit the invention in any way. Singular nouns and the articles "a" and "an" are of course not meant to exclude the possibility of plurals. Devices mentioned in this document, such as smartphones and tablet-type devices, may be replaced with their successors, even if these successors are not yet known at the time of writing. As is well established in the law of patents, the abstract should never be used to limit the scope of the claims, and neither should reference numbers in the claims.

It will further be understood by those skilled in the art that the present invention is not limited to the embodiments mentioned above and that many additions and modifications are possible without departing from the scope of the invention as defined in the appending claims.

## Claims

1. A client device (12) configured for delivering broadcast content to a display device (13), the client device comprising:
- a user-operable channel selection unit (31) configured for selecting a broadcast channel from a plurality of broadcast channels (CH1 - CH7) provided by a back-end device,
- a channel detection unit (32) configured for detecting, at a plurality of points in time (t₁, t₂, ...), the broadcast channel selected by the selection unit at the respective point in time, and
- a channel reporting unit (33) configured for reporting, to a back-end device, the broadcast channel determined by the channel detection unit at each of the points in time.

2. The client device according to claim 1, wherein the channel detection unit (31) is configured for detecting the broadcast channel by using fixed intervals (I₁, I₂, ... ) between the points in time, said intervals preferably being at least one minute and at most 30 minutes, said intervals more preferably being approximately five minutes.

3. The client device according to claim 1, wherein the channel detection unit (31) is configured for detecting the broadcast channel by using variable intervals between the points in time.

4. The client device according to claim 3, wherein the channel detection unit (31) is configured for varying the intervals (I₁, I₂, ... ) in dependence of an event in the selected broadcast, wherein the event may comprise a commercial break (CB) and/or the start of a new content item.

5. The client device according to claim 3, wherein the channel detection unit (31) is configured for varying the intervals (I₁, I₂, ... ) in dependence of user-operated selection of another broadcast channel.

6. The client device according to claim 4 or 5, wherein the channel detection unit (31) is configured for shortening the intervals (I₁, I₂, ... ) in dependence of selection of another channel.

7. The client device according to any of the preceding claims, further comprising the display device (13).

8. A back-end device (11) configured for use with the client device (12) according to any of the preceding claims, comprising:
- a first storage unit (41) for storing a table (20) of broadcast channels (CH1 - CH7) and associated content items (P1 - P17) with their start and end times, and
- a content determination unit (42) for determining, using the reported broadcast channels, the associated points in time and the table (20) of broadcast channels, the content items selected by the client device.

9. The back-end device according to claim 8, wherein the content determination unit (42) is further configured for determining, using the reported points in time and the stored start and end times, a selection duration of a selected content item.

10. The back-end device according to claim 9, further comprising a ranking unit (43) for ranking content items in accordance with their selection duration.

11. The back-end device according to claim 9 or 10, further comprising a second storage unit (44) for storing content items to be transmitted on demand, wherein each content item can be stored in at least two versions, each version having different memory requirements, and wherein the second storage unit (44) is configured to delete at least one version of a content item having a low selection duration and/or a low ranking.

12. A broadcast system (10), comprising at least one client device (12) according to any of claims 1 to 7 and at least one back-end device (11) according to any of claims 8 to 11.

13. A method of determining broadcast channel use, wherein a broadcast channel is selected by a user from a plurality of broadcast channels (CH1 - CH7), the method comprising:
- detecting, in a client device (12) at a plurality of points in time, which broadcast channel is selected, and
- reporting, to a back-end device (11), the determined broadcast channel at each of the points in time.

14. The method according to claim 13, further comprising:
- determining, using the reported broadcast channels at each of the points in time and a stored table (10) of broadcast channels and associated content items with their start and end times, the content items selected by the client device.

15. The method according to claim 14, further comprising:
- determining, using the points in time and the start and end times, a selection duration of a selected content item, and preferably
- ranking content items in accordance with their selection duration.

16. The method according to claim 15, further comprising:
- storing content items to be transmitted on demand, wherein each content item can be stored in at least two versions, each version having different memory requirements, and
- deleting at least one version of a content item having a low selection duration and/or a low ranking.

17. A software program product (50) comprising instructions allowing a processor to carry out the method according to any of claims 13 to 16.
